# EUROPEAN PATENT APPLICATION

(11) **EP 2 905 985 A1**
(43) Date of publication of application: **12.08.2015**
(21) Application number: 13844244.7
(22) Date of filing: 30.09.2013
(51) Int. Cl.: H04W 16/32, H04W 72/04, H04W 80/02, H04W 84/10

(54) **TERMINAL APPARATUS, BASE STATION APPARATUS, WIRELESS COMMUNICATION SYSTEM, CONTROL METHOD AND INTEGRATED CIRCUIT**

(30) Priority: 03.10.2012 JP 2012221114
(71) Applicant: Sharp Kabushiki Kaisha, Osaka-shi, Osaka 545-8522 (JP)
(72) Inventor: KATO, Yasuyuki, Osaka-shi, Osaka 545-8522 (JP); UEMURA, Katsunari, Osaka-shi, Osaka 545-8522 (JP); TSUBOI, Hidekazu, Osaka-shi, Osaka 545-8522 (JP)
(74) Representative: Müller-Boré & Partner Patentanwälte PartG mbB
(86) International application number: PCT/JP2013/076508
(87) International publication number: WO 2014/054568

(57) **Abstract**

A terminal apparatus has a communication protocol stack having a hierarchical structure and communicates with a base station apparatus through a plurality of cells. When a first layer of the communication protocol stack receives data from the base station apparatus, the first layer receives uplink grant data from the base station apparatus, the first layer notifies a second layer of the uplink grant and information of cells to which the uplink grant is transmitted, a third layer notifies the second layer of logical channel information for classifying logical channels corresponding to the respective cells, and the second layer distributes the data of the logical channels to the respective cells on the basis of the logical channel information, the uplink grant, and the information of the cells to which the uplink grant is transmitted.

## Description

### TECHNICAL FIELD

The present disclosure relates to a terminal apparatus, a base station apparatus, and a wireless communication system, and, more specifically, relates to a terminal apparatus, a base station apparatus, a wireless communication system, a control method, and an integrated circuit which are related to data transmission control.

This application claims priority of Japanese Patent Application No. 2012-221114 filed on October 3, 2012, the contents of which are incorporated herein by reference.

### BACKGROUND ART

In 3rd Generation Partnership Project (3GPP), a W-CDMA system is standardized as a 3rd generation cellular mobile communication system and the services thereof are provided. In addition, HSDPA, in which communication speed is further improved, is standardized and the services thereof are provided.

In contrast, in the 3GPP, 3rd Generation Evolved Universal Terrestrial Radio Access (hereinafter, referred to as the "EUTRA") is standardized and the services thereof have started. An Orthogonal Frequency Division Multiplexing (OFDM) system, which is resistant to multipath interference and is appropriate for high-speed transmission, is used as the downlink communication system of the EUTRA. In addition, Discrete Fourier Transform (DFT)-spread OFDM method of Single Carrier-Frequency Division Multiple Access (SC-FDMA), in which the cost and the power consumption of a mobile station apparatus is taken into consideration and it is possible to reduce the Peak to Average Power Ratio (PAPR) of a transmit signal, is used as an uplink communication system.

In addition, in the 3GPP, discussion of the Advanced-EUTRA, which is the further progressed EUTRA, has started. In the Advanced-EUTRA, bands, in which a bandwidth is a maximum of 100 MHz, are used in the uplink and downlink, respectively, and thus it is assumed that communication is performed at a transmission rate of a maximum of 1 Gbps or higher in the downlink and at a transmission rate of a maximum of 500 Mbps or higher in the uplink.

In the Advanced-EUTRA, it is considered that a band of 100 MHz is realized by bundling a plurality of bands of 20 MHz of the EUTRA such that it is possible to accommodate the mobile station apparatus of the EUTRA. Also, in the Advanced-EUTRA, a single band of the EUTRA of 20 MHz or less is called a Component Carrier (CC). A Component Carrier is called a cell. In addition, the bundling of bands of 20 MHz is called Carrier Aggregation (CA) (refer to NPL 1).

In addition, in the Advanced-EUTRA, it is considered that the carrier aggregation is performed on a macro cell and small cells which are present in the range of the macro cell. In NPL 2, transmission of control information in the macro cell and transmission of user information in the small cells are proposed in communication between a base station apparatus and a mobile station apparatus when the carrier aggregation is performed on the macro cell and the small cells.

### CITATION LIST

### [Non-Patent Document]

NPL 1: 3GPP TS (Technical Specification) 36.300, V 10.8.0 (2012-06), Evolved Universal Terrestrial Radio Access (E-UTRA) and Evolved Universal Terrestrial Radio Access Network (E-UTRAN), Overall description Stage 2
NPL 2: RWS-120010, NTT DOCOMO, "Requirements, Candidate Solutions & Technology Roadmap for LTE Rel-12 Onward", 3GPP Workshop on Release 12 and onward, Ljubljana, Slovenia, 11-12 June, 2012
NPL 3: 3GPPTS (Technical Specification) 36.321, V10.5.0 (2012-03), Evolved Universal Terrestrial Radio Access (E-UTRA) Medium Access control (MAC) protocol specification

### DISCLOSURE OF THE INVENTION

### Problems to be Solved by the Invention

However, as disclosed in NPL 2, when the control information is transmitted in the macro cell and the user information is transmitted in the small cells in the communication between the base station apparatus and the mobile station apparatus, control needs to be performed such that the control information and the user information are transmitted in appropriate cells. Implementation is possible if two or more protocol stacks are implemented in the base station apparatus and the mobile station apparatus up to a higher layer and a process is performed in the higher layer. However, the base station apparatus and the mobile station apparatus are complicated and expensive. In addition, a current EUTRA mobile station apparatus does not have a function of distributing and transmitting the control information and the user information for the respective cells in a lower layer.

The present disclosure is made in consideration of the above problem, and an object of the present disclosure is to provide a mobile station apparatus, a base station apparatus, a wireless communication system, a wireless communication method and an integrated circuit which are capable of appropriately performing data distribution control in the lower layer of a protocol stack in the base station apparatus and the mobile station apparatus.

### Means for Solving the Problems

(1) In order to accomplish the object, the present disclosure provides the sections below. That is, according to an embodiment of the present disclosure, there is provided a wireless communication system in which a base station apparatus communicates with a terminal apparatus through a plurality of cells. The base station apparatus may transmit logical channel information for classifying logical channels corresponding to the respective cells to the terminal apparatus, and the terminal apparatus may transmit data of the logical channels corresponding to the respective cells based on the logical channel information.
(2) In addition, in the wireless communication system, the terminal apparatus may transmit a buffer status report to the base station apparatus based on the logical channels.
(3) In addition, in the wireless communication system, the terminal apparatus may perform division on a scheduling request and transmit resulting scheduling requests to the cells to which the buffer status report is transmitted.
(4) According to another embodiment of the present disclosure, there is provided a terminal apparatus, which includes a communication protocol stack having a hierarchical structure and communicates with a base station apparatus through a plurality of cells, the terminal apparatus including: means for causing a first layer of the communication protocol stack to receive data from the base station apparatus; means for causing, when the first layer receives uplink grant data from the base station apparatus, the first layer to notify a second layer of the uplink grant and information of the cells to which the uplink grant is transmitted; means for causing a third layer to notify the second layer of logical channel information for classifying the logical channels corresponding to the respective cells; and means for causing the second layer to distribute the data of the respective logical channels to the respective cells on the basis of the logical channel information, the uplink grant, and the information of the cells to which the uplink grant is transmitted.
(5) In addition, the terminal apparatus may notify the base station apparatus of the fact that means for distributing the data of the logical channels is included.
(6) According to still another embodiment of the present disclosure, there is provided a base station apparatus, which communicates with a terminal apparatus through a plurality of cells. When data needs to be classified for the respective cells in the plurality of cells, the base station apparatus may transmit logical channel information for classifying logical channels corresponding to the respective cells to the terminal apparatus.
(7) The base station apparatus may notify the terminal apparatus of a fact that the base station apparatus has a function of transmitting the logical channel information is included.
(8) In addition, according to still another embodiment of the present disclosure, there is provided a method of controlling a terminal apparatus, which has a communication protocol stack having a hierarchical structure and communicates with a base station apparatus through a plurality of cells, the method at least including: a step of causing a first layer of the communication protocol stack to receive data from the base station apparatus; a step of causing, when the first layer receives uplink grant data from the base station apparatus, the first layer to notify a second layer of the uplink grant and information of the cells to which the uplink grant is transmitted; a step of causing a third layer to notify the second layer of logical channel information for classifying the logical channels corresponding to the respective cells; and a step of causing the second layer to distribute the data of the respective logical channels to the respective cells on the basis of the logical channel information, the uplink grant, and the information of the cells to which the uplink grant is transmitted.
(9) In addition, according to still another embodiment of the present disclosure, there is provided an integrated circuit applied to a terminal apparatus, which has a communication protocol stack having a hierarchical structure and communicates with a base station apparatus through a plurality of cells, the integrated circuit including: means for causing a first layer of the communication protocol stack to receive data from the base station apparatus; means for causing, when the first layer receives uplink grant data from the base station apparatus, the first layer to notify a second layer of the uplink grant and information of the cells to which the uplink grant is transmitted; means for causing a third layer to notify the second layer of logical channel information for classifying the logical channels corresponding to the respective cells; and means for causing the second layer to distribute the data of the respective logical channels to the respective cells on the basis of the logical channel information, the uplink grant, and the information of the cells to which the uplink grant is transmitted.

### Effects of the Invention

According to the present disclosure, it is possible for the mobile station apparatus to appropriately distribute and transmit the control information and the user information to cells to which the control information and the user information are transmitted.

### BRIEF DESCRIPTION OF THE DRAWINGS

[Fig. 1] Fig. 1 is a diagram of the configuration of the physical channels of the EUTRA.
[Fig. 2] Fig. 2 is a diagram of the configuration of the channels of the EUTRA in downlink.
[Fig. 3] Fig. 3 is a diagram of the configuration of the channels of the EUTRA in uplink.
[Fig. 4] Fig. 4 is a diagram of the configuration of a communication protocol related to control information of a base station apparatus and a mobile station apparatus.
[Fig. 5] Fig. 5 is a diagram of the configuration of a communication protocol related to user information of the base station apparatus and the mobile station apparatus.
[Fig. 6] Fig. 6 is an explanatory diagram of the Advanced-EUTRA.
[Fig. 7] Fig. 7 is a diagram of the configuration of the mobile station apparatus according to an embodiment of the present disclosure.
[Fig. 8] Fig. 8 is a diagram of the configuration of the base station apparatus according to the embodiment of the present disclosure.
[Fig. 9] Fig. 9 is a flowchart of an example of an operation of the mobile station apparatus according to the embodiment of the present disclosure.
[Fig. 10] Fig. 10 is a diagram of the configuration of a MAC layer related to the uplink of the mobile station apparatus according to the embodiment of the present disclosure.

### MODE FOR CARRYING OUT THE INVENTION

An OFDM method is used as the downlink of the EUTRA. In addition, a single carrier communication system of a DFT-spread OFDM method is used as the uplink of the EUTRA.

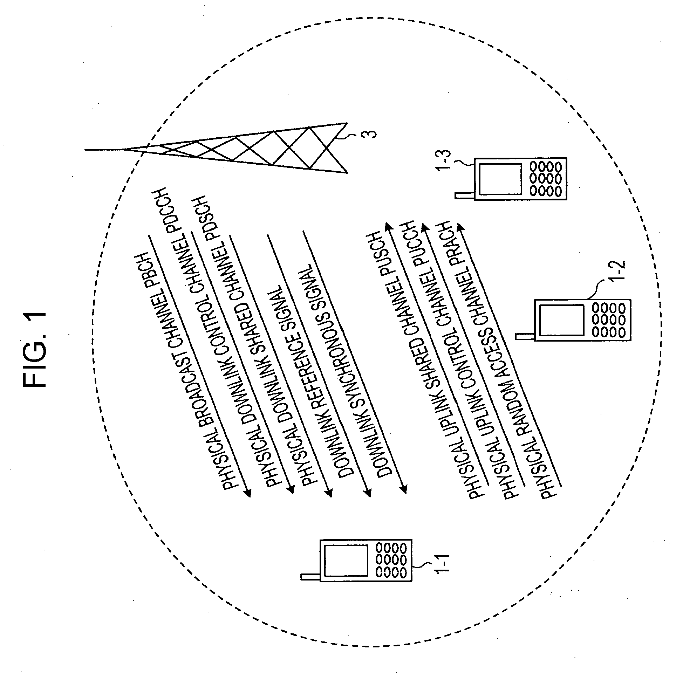

Fig. 1 is a diagram showing the configuration of the physical channels of EUTRA. The physical channels in downlink include a Physical Downlink Shared Channel (PDSCH), a Physical Downlink Control Channel (PDCCH), and a Physical Broadcast Channel (PBCH). In addition, logical signals, such as a downlink synchronous signal and a downlink reference signal, exist.

The physical channels in uplink include a Physical Random Access Channel (PRACH), a Physical Uplink Shared Channel (PUSCH), and a Physical Uplink Control Channel (PUCCH).

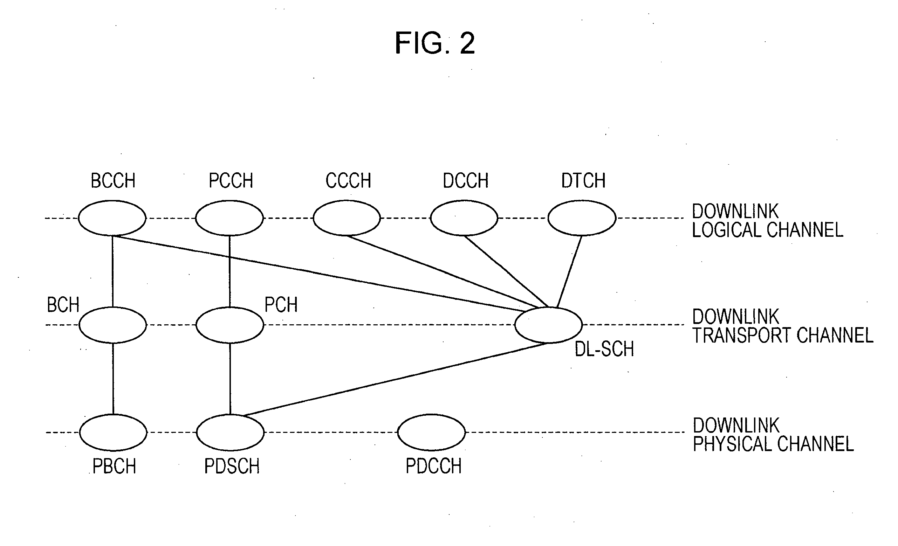

Fig. 2 is a diagram showing the configuration of the channels of the EUTRA in the downlink. The channels in the downlink shown in Fig. 2 include logical channels, transport channels, and physical channels, respectively. The logical channels define the types of data transmission services which are transmitted and received in a Medium Access control (MAC) layer. The transport channels define the features of data transmitted through a wireless interface, and the transmission of the data. The physical channels are physical channels for carrying the transport channels.

The logical channels in the downlink include a Broadcast Control Channel (BCCH), a Paging Control Channel (PCCH), a Common Control Channel (CCCH), a Dedicated Control Channel (DCCH), and a Dedicated Traffic Channel (DTCH).

The transport channels in the downlink include a Broadcast Channel (BCH), a Paging Channel (PCH), and a Downlink Shared Channel (DL-SCH).

The physical channels in the downlink include a Physical Broadcast Channel (PBCH), a Physical Downlink Control Channel (PDCCH), and a Physical Downlink Shared Channel (PDSCH). The channels are transmitted and received between a base station apparatus and a mobile station apparatus.

Subsequently, the logical channels will be described. The broadcast control channel BCCH is a channel in the downlink, which is used to broadcast system control information. The paging control channel PCCH is a channel in the downlink, which is used to transmit paging information, and is used when a network does not know the cell position of the mobile station apparatus. The common control channel CCCH is a channel, which is used to transmit control information between the mobile station apparatus and the network, and is used by the mobile station apparatus in which Radio Resource Control (RRC) connection with the network is not established.

The dedicated control channel DCCH is a point-to-point bi-directional channel, and is a channel which is used to transmit individual control information between the mobile station apparatus and the network. The dedicated control channel DCCH is used by the mobile station apparatus in which the RRC connection is established. The dedicated traffic channel DTCH is a point-to-point bi-directional channel, is a dedicated channel for a single mobile station apparatus, and is used to transmit the user information (unicast data).

Subsequently, the transport channels will be described. The broadcast channel BCH is broadcasted to all cells depending on a fixed or previously defined transmission protocol. In the downlink shared channel DL-SCH, Hybrid Automatic Repeat Request (HARQ), dynamic adaptation radio link control, and Discontinuous Reception (DRX) need to be supported and broadcasted to all of the cells.

In the paging channel PCH, the DRX needs to be supported and broadcasted to all of the cells. In addition, the paging channel PCH is mapped onto a physical resource, which is dynamically used for a traffic channel or another control channel, that is, onto the physical downlink shared channel PDSCH.

Subsequently, the physical channels will be described. The physical broadcast channel PBCH maps the broadcast channel BCH at a period of 40 msec. The physical downlink control channel PDCCH is a channel which notifies the mobile station apparatus of the resource allocation of the downlink shared channel PDSCH, Hybrid Automatic Repeat Request (HARQ) information for downlink data, and uplink transmission permission (uplink grant) which is the resource allocation of the physical uplink shared channel PUSCH. The physical downlink shared channel PDSCH is a channel which is used to transmit the downlink data or the paging information.

Subsequently, channel mapping will be described. As shown in Fig. 2, the transport channels are mapped onto the physical channels in the downlink as described below. The broadcast channel BCH is mapped onto the physical broadcast channel PBCH. The paging channel PCH and the downlink shared channel DL-SCH are mapped onto the physical downlink shared channel PDSCH. The physical downlink control channel PDCCH is used as an independent physical channel.

In addition, in the downlink, the logical channels are mapped onto the transport channels as described below. The paging control channel PCCH is mapped onto the paging channel PCH. The broadcast control channel BCCH is mapped onto the broadcast channel BCH and the downlink shared channel DL-SCH. The common control channel CCCH, the dedicated control channel DCCH, and the dedicated traffic channel DTCH are mapped onto the downlink shared channel DL-SCH.

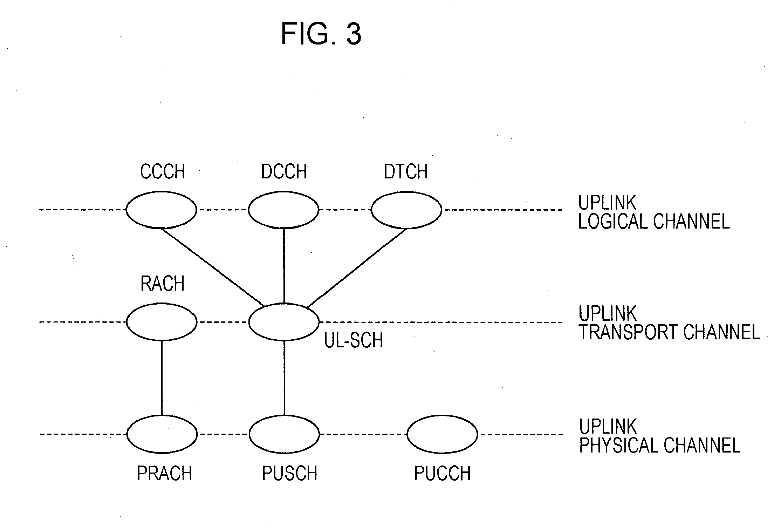

Fig. 3 is a diagram showing the configuration of the channels in the uplink of the EUTRA. The channels in the uplink shown in Fig. 3 include logical channels, transport channels, and physical channels. The channels are defined in the same manner as the channels in the downlink. (The logical channels define the types of data transmission services which are transmitted and received in the Medium Access Control (MAC) layer. The transport channels define the features of data transmitted through wireless interfaces, and the transmission of the data. The physical channels are physical channels for carrying the transport channels).

The logical channels in the uplink include a Common Control Channel (CCCH), a Dedicated Control Channel (DCCH), and a Dedicated Traffic Channel (DTCH).

The transport channels in the uplink include an Uplink Shared Channel (UL-SCH) and a Random Access Channel (RACH).

The physical channels in the uplink include a Physical Uplink Control Channel (PUCCH), a Physical Uplink Shared Channel (PUSCH), and a Physical Random Access Channel (RACH). The channels are transmitted and received between the base station apparatus and the mobile station apparatus.

Subsequently, the logical channels will be described. The common control channel CCCH is a channel which is used to transmit control information between the mobile station apparatus and the network, and is used by the mobile station apparatus in which Radio Resource Control (RRC) connection with the network is not established.

The dedicated control channel DCCH is a point-to-point bi-directional channel, and is a channel which is used to transmit individual control information between the mobile station apparatus and the network. The dedicated control channel DCCH is used by the mobile station apparatus in which the RRC connection is established. The dedicated traffic channel DTCH is a point-to-point bi-directional channel. The dedicated traffic channel is a dedicated channel for a single mobile station apparatus, and is used to transmit the user information (unicast data).

Subsequently, the transport channels will be described. In the Uplink Shared Channel UL-SCH, the Hybrid Automatic Repeat Request (HARQ), the dynamic adaptation radio link control, and the Discontinuous Transmission (DTX) are supported. In the random access channel RACH, limited control information is transmitted.

Subsequently, the physical channels will be described. The physical uplink control channel PUCCH is a channel which is used to notify the base station apparatus of response information (Acknowledgement (ACK)/Negative Acknowledgement (NACK)) for the downlink data, downlink wireless quality information, and a transmission request for uplink data (Scheduling Request (SR)). The physical uplink shared channel PUSCH is a channel which is used to transmit the uplink data. The physical random access channel is a channel which is used to transmit a random access preamble.

Subsequently, channel mapping will be described. As shown in Fig. 3, the transport channels are mapped onto the physical channels in the uplink. The uplink shared channel UL-SCH is mapped onto the physical uplink shared channel PUSCH. The random access channel RACH is mapped onto the physical random access channel PRACH. The physical uplink control channel PUCCH is used as an independent physical channel.

In addition, in the uplink, the logical channels are mapped onto the transport channels as described below. The common control channel CCCH, the dedicated control channel DCCH, and the dedicated traffic channel DTCH are mapped onto the uplink shared channel UL-SCH.

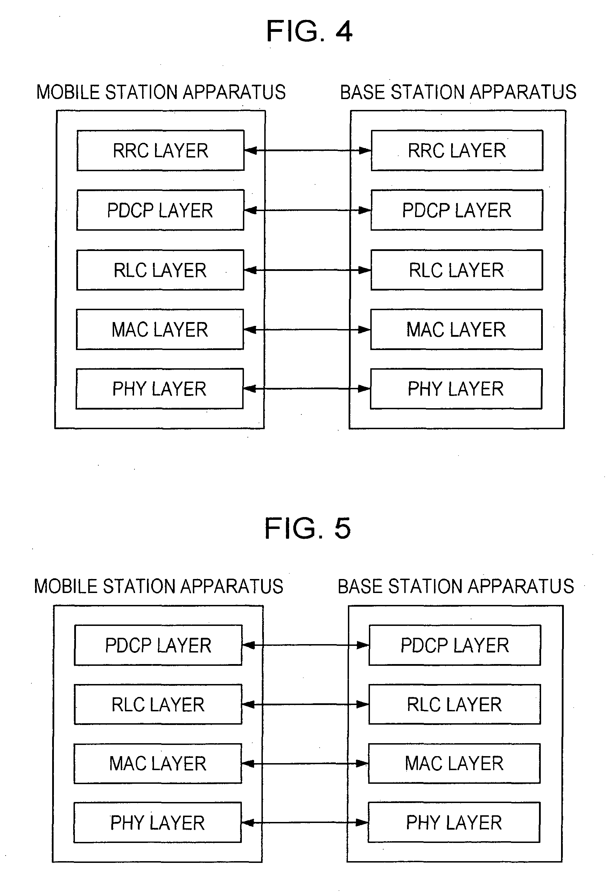

Fig. 4 shows a protocol stack for treating control data between the mobile station apparatus and the base station apparatus of the EURTA. Fig. 5 is a diagram of the protocol stack of the EURTA for treating user data between the mobile station apparatus and the base station apparatus. Description will be made with reference to Figs. 4 and 5.

A physical layer (PHY layer) provides a transmission service to a higher layer using the physical channels. The PHY layer is coupled to an upper Medium Access Control (MAC) layer through the transport channels. Data is transferred between the MAC layer and the PHY layer through the transport channels. Data is transmitted or received between the PHY layers of the mobile station apparatus and the base station apparatus through the physical channels.

The MAC layer maps the various logical channels onto the various transport channels. The MAC layer is coupled to an upper Radio Link Control (RLC) layer through the logical channels. The logical channels are significantly classified according to the type of information to be transmitted, and are classified as control channels for transmitting control information and traffic channels for transmitting the user information.

The RLC layer segments and concatenates data received from a higher layer, and adjusts data sizes such that a lower layer can appropriately transmit data. In addition, the RLC layer has a function of guaranteeing Quality of Service (QoS) which is requested by respective data. That is, the RLC layer has a function of controlling retransmission of data.

A Packet Data Convergence Protocol (PDCP) layer has a header compression function of compressing unnecessary control information in order to effectively transmit an IP packet, which is the user data, in a radio section. In addition, the PDCP layer has a data encryption function.

A Radio Resource Control (RRC) layer defines only the control information. The RRC layer sets or resets Radio Bearers (RB), and controls the logical channels, the transport channels, and the physical channels. The RBs are classified as control data radio bearers (Signaling Radio Bearer (SRB)) and Data Radio Bearers (DRB). The SRBs are used as paths for transmitting an RRC message which is the control information. The DRBs are used as paths for transmitting the user information. The respective RBs are set between the RRC layers of the base station apparatus and the mobile station apparatus.

Also, the PHY layer corresponds to a physical layer which is the first layer of the hierarchical structure of a generally known Open Systems Interconnection (OSI) model, the MAC layer, the RLC layer and the PDCP layer correspond to a data link layer which is the second layer of the OSI model, and the RRC layer corresponds to a network layer which is the third layer of the OSI model.

The function of the MAC layer of the mobile station apparatus will be described in further detail below.

The MAC layer has a function of mapping the respective logical channels onto the transport channels. The procedure is called a Logical Channel Prioritization (LCP) procedure. Basically, the LCP procedure includes steps of taking a transmission bit rate (Prioritized Bit Rate (PBR)), in which the priorities of the respective logical channels and the QoS of the radio bearers are taken into consideration and which is desired to be transmitted within a prescribed period, determining the transmission priorities of transmission data, and mapping data having higher transmission priorities onto the transport channels at a time point in which the uplink grant is received. In a case of connecting to the base station apparatus, the MAC layer acquires information, such as the logical channel numbers of the respective RBs, the priorities of the logical channels, and PBRs, from the RRC layer (refer to NPL 3).

In addition, the MAC layer has a function of notifying the data quantities of transmission buffers which correspond to the respective logical channels. The function is called a Buffer Status Report (BSR). In the BSR, the respective logical channels are allocated to a Logical Channel Group (LCG), and transmission buffer quantity for each LCG is notified to the base station apparatus as the message of the MAC layer. A BSR trigger condition includes some conditions. For example, data, which can be transmitted, is generated, and a BSR is triggered when the priorities of the logical channels of the transmittable data are higher than those of data stored in the transmission buffer, and the BSR is notified. In addition, the BSR is triggered when a single periodic timer expires, and the BSR is notified.

Also, when a radio resource (physical uplink shared channel PUSCH) for notifying the BSR is not allocated in a case in which the BSR is triggered, the MAC layer instructs the PHY layer to transmit a Scheduling Request (SR). The MAC layer transmits the BSR after the radio resource is allocated. When the transmission of the scheduling request is instructed by the MAC layer, the PHY layer transmits the scheduling request using the physical uplink control channel PUCCH. Also, when the physical uplink control channel PUCCH for transmitting the scheduling request is not allocated, the PHY layer provides the scheduling request using the physical random access channel PRACH.

In addition, the MAC layer has a function of controlling the PHY layer in order to perform discontinuous reception and discontinuous transmission (DRX or DTX), a function of notifying transmission power information, and a function of performing HARQ control.

In the 3GPP, discussion of the Advanced-EUTRA, which is the further progressed EUTRA, is performed. In the Advanced-EUTRA, bands, in which a bandwidth is a maximum of 100 MHz, are used in the uplink and downlink, respectively, and thus it is assumed that communication is performed at a transmission rate of a maximum of 1 Gbps or higher in the downlink and at a transmission rate of a maximum of 500 Mbps or higher in the uplink.

In the Advanced-EUTRA, it is considered that a band of a maximum of 100 MHz is realized by bundling a plurality of bands of 20 MHz or less of the EUTRA such that the mobile station apparatus of the EUTRA can accommodate the band. Also, in the Advanced-EUTRA, a single band of 20 MHz or less of the EUTRA is called a Component Carrier (CC) (refer to NPL 1). In addition, a single cell is formed by combining a single component carrier in the downlink and a single component carrier in the uplink. Also, it is possible to form the single cell using only a single component carrier in the downlink.

The base station apparatus is configured to allocate a plurality of cells, which satisfy the communication capability or the communication condition of the mobile station apparatus, and to communicate with the mobile station apparatus through the plurality of allocated cells. Also, in the plurality of cells, which are allocated to the mobile station apparatus, a single cell is classified as a Primary Cell (PCell) and remaining cells are classified as Secondary Cells (SCells). Special functions of allocating the uplink control channel PUCCH and permitting access to the random access channel RACH are set to the primary cell. In addition, in order to reduce the electrical power consumption of the mobile station apparatus, the mobile station apparatus is configured to start a reception process in the downlink (or to subject to information of the radio resource allocation instructed in the downlink control channel) for secondary cells which are instructed to be activated after activation is instructed from the base station apparatus without performing the reception process in the downlink (or not to subject to information of radio resource allocation instructed in the downlink control channel) for the secondary cells immediately after the allocation.

In addition, the mobile station apparatus is configured to stop the reception process in the downlink for the secondary cells which are instructed to be deactivated (or to not subject to the information of the radio resource allocation instructed in the downlink control channel) after deactivation of the secondary cells, which are activated, is instructed from the base station apparatus. Also, the secondary cells, which are instructed to be activated by the base station apparatus and which perform the reception process in the downlink, are called activated cells. In addition, the secondary cells, which are acquired immediately after the base station apparatus performs allocation with regard to the mobile station apparatus, and the secondary cells, which are instructed to be deactivated and which stop the reception process in the downlink, are called deactivated cells. In addition, the primary cell is usually an activated cell.

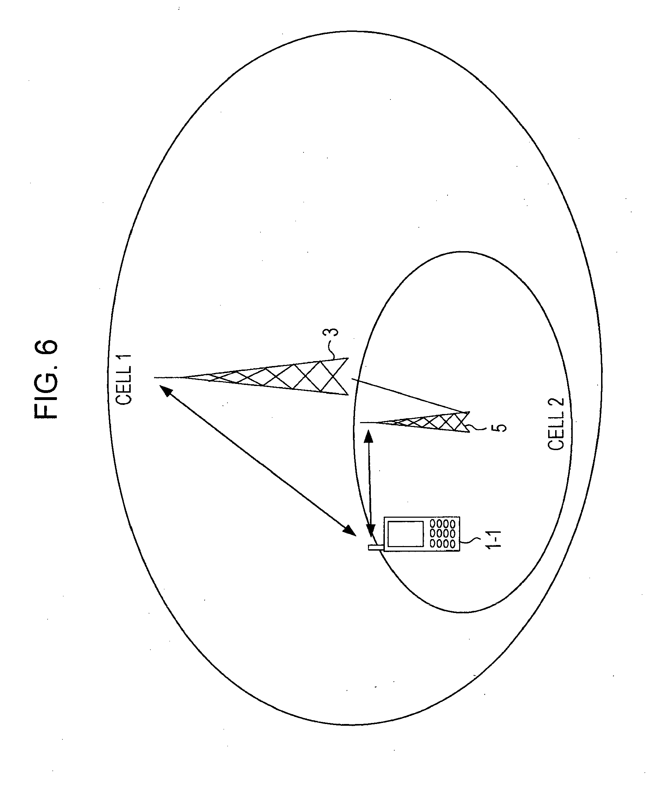

In addition, there is a case in which the mobile station apparatus communicates with the base station apparatus through a Radio Remote Head (RRH), a repeater, or the like while performing the carrier aggregation, as shown in Fig. 6. In this case, both or one of a downlink Component Carrier reception timing in the mobile station apparatus and the transmission timing to the base station apparatus for each uplink component carrier differs for each cell. In this case, communication is performed in such a way that cells which have the same transmission timing form a group. The formation of the group of the cells, which are at the same transmission timing, is called a transmission timing group (Timing Advance Group).

Also, when the carrier aggregation is performed, the MAC layer of the mobile station apparatus has a function of controlling the PHY layer in order to perform the activation/deactivation of the cells and a function of controlling the PHY layer in order to manage the transmission timing group.

### (Embodiment)

### [Description of Configuration]

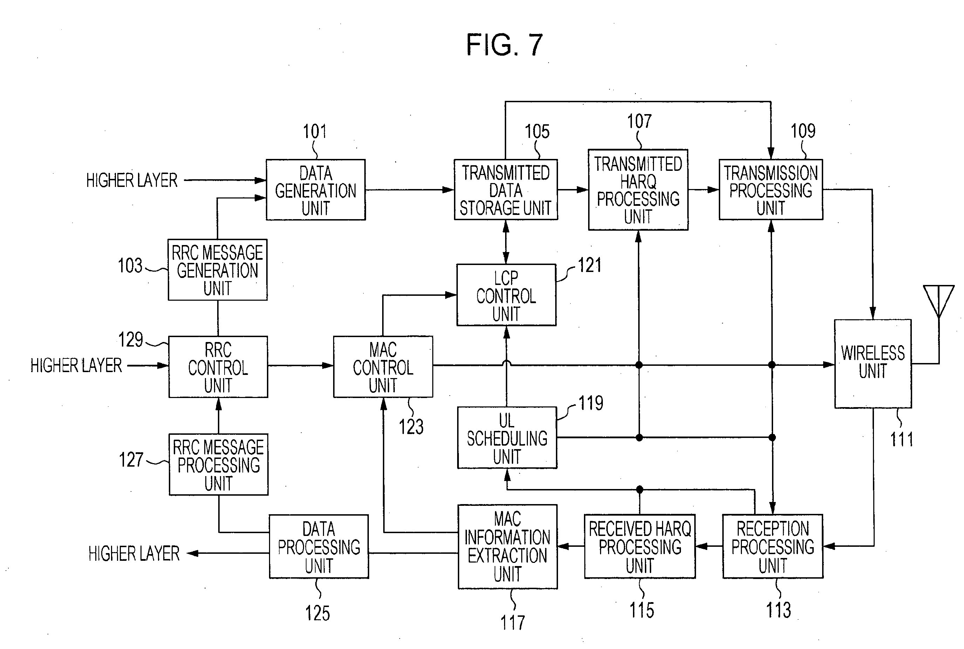

Fig. 7 is a diagram showing the configuration of a mobile station apparatus according to an embodiment of the present disclosure. Each of mobile station apparatuses 1-1 to 1-3 includes a data generation unit 101, an RRC message generation unit 103, a transmission data storage unit 105, a transmission HARQ processing unit 107, a transmission processing unit 109, a wireless unit 111, a reception processing unit 113, a reception HARQ processing unit 115, a MAC information extraction unit 117, a UL scheduling unit 119, an LCP control unit 121, a MAC control unit 123, a data processing unit 125, an RRC message processing unit 127, and an RRC control unit 129.

The user data from the higher layer and the control data from the RRC message generation unit 103 are input to the data generation unit 101. The data generation unit 101 has the functions of the PDCP layer and the RLC layer, performs processes of compressing the header of the IP packet of the user data, encrypting data, and segmenting and coupling the data, and adjusting data size. The data generation unit 101 outputs processed data and the logical channel information of the data to the transmission data storage unit 105. The RRC message generation unit 103 prepares the RRC message according to the instruction of the RRC control unit 129, and outputs the RRC message to the data generation unit 101.

The transmission data storage unit 105 accumulates the data, which is input from the data generation unit 101, for the respective logical channels, and outputs the data of the logical channels, which is instructed based on the instruction from the LCP control unit 121, to the transmission HARQ processing unit 107 as much as the instructed data quantity. In addition, the transmission data storage unit 105 outputs the data quantity information of the data accumulated for the respective logical channels, to the LCP control unit 121. In addition, when data having a higher priority than the accumulated data is input, the transmission data storage unit 105 controls the transmission processing unit 109 such that a scheduling request signal is transmitted to the base station apparatus 3 for each prescribed period. Further, the transmission data storage unit 105 prepares the message of the MAC layer, which indicates BSR information after the scheduling request signal is transmitted.

The transmission HARQ processing unit 107 encodes the input data, and performs a puncture process on the encoded data. Further, the transmission HARQ processing unit 107 outputs the punctured data to the transmission processing unit 109, and stores the encoded data. When data retransmission is instructed from the UL scheduling unit 119, the transmission HARQ processing unit 107 performs a puncture process, which is different from the previously performed puncture process, based on the stored encoded data, and outputs the punctured data to the transmission processing unit 109.

The transmission processing unit 109 modulates and encodes the data which is input from the transmission data control unit 107. The transmission processing unit 109 performs a Discrete Fourier Transform (DFT)-Inverse Fast Fourier Transform (IFFT) process on the modulated and encoded data. After the process is performed, the transmission processing unit 109 inserts a Cyclic Prefix (CP), arranges the data, which is acquired after the CP is inserted, in the physical uplink shared channel (PUSCH) of each component carrier, and outputs the data to the wireless unit 111. In addition, when scheduling request transmission is instructed from the transmission data storage unit 105, the transmission processing unit 109 generates the scheduling request signal, arranges the generated scheduling request signal in the physical uplink control channel (PUCCH), and outputs the scheduling request signal to the wireless unit 111. In addition, when a response to the received data is instructed from the UL scheduling unit 119, the transmission processing unit 109 generates an ACK or NACK signal, arranges the generated signal in the physical uplink control channel (PUCCH), and outputs the signal to the wireless unit 111.

The wireless unit 111 up converts the data, which is input from the transmission processing unit 109, into a radio frequency, and transmits data from a transmit antenna by adjusting transmission power. In addition, the wireless unit 111 down converts a radio signal, which is received from a receive antenna, and outputs a radio signal, which is acquired through down conversion, to the reception processing unit 113. The reception processing unit 113 performs a Fast Fourier Transform (FFT) process, a decoding process, a demodulation process, and the like on the signal which is input from the wireless unit 111. The reception processing unit 113 outputs the data of the physical downlink shared channel (PDSCH) in the demodulated data to the reception HARQ processing unit 115. In addition, the reception processing unit 113 outputs the response information (ACK/NACK) of uplink transmission data of the control data, which is acquired from the physical downlink control channel PDCCH, in the demodulated data and uplink transmission permission information (uplink grant) to the UL scheduling unit 119. Also, the uplink transmission permission information includes a data modulating and encoding method, data size information, HARQ information, transmission position information, and the like.

The reception HARQ processing unit 115 performs the decoding process on the data, which is input from the reception processing unit 113, and outputs the decoded data to the MAC information extraction unit 117 when the decoding process is successful. When the decoding process, which is performed on the input data, fails, the reception HARQ processing unit 115 stores the data which fails in the decoding process. When the reception HARQ processing unit 115 receives retransmission data, the reception HARQ processing unit 115 combines the stored data with the retransmission data, and performs the decoding process. In addition, the reception HARQ processing unit 115 notifies the UL scheduling unit 119 about the success or failure of the input data decoding process.

The MAC information extraction unit 117 extracts the control data of the Medium Access Control (MAC) layer from the data, which is input from the reception HARQ processing unit 115, and outputs the extracted control information to the MAC control unit 123. The MAC information extraction unit 117 outputs remaining data to the data processing unit 125. The data processing unit 125 has functions of the PDCP layer and the RLC layer, and performs a function of decompressing the compressed IP header, a function of decoding the encrypted data and a process of segmenting and coupling the data, thereby returning the data to have the original form thereof. The data processing unit 125 performs classification as the RRC message and the user data, outputs the RRC message to the RRC message processing unit 127, and outputs the user data to the higher layer.

The UL scheduling unit 119 outputs the data size information and the transmission position information to the LCP control unit 121 based on the uplink transmission permission information, which is input from the reception processing unit 113, notifies the transmission HARQ processing unit 107 about the HARQ information, and outputs the modulating and encoding method and the transmission position information to the transmission processing unit 109. In addition, the UL scheduling unit 119 acquires the response information for the uplink transmission data from the reception processing unit 113. When the response information indicates the negative acknowledgement (NACK), the UL scheduling unit 119 instructs retransmission to the transmission HARQ processing unit 107 and the transmission processing unit 109. When success or failure information about the data decoding process is acquired from the reception HARQ processing unit 115, the UL scheduling unit 119 instructs the transmission processing unit 109 to transmit the ACK or NACK signal.

The LCP control unit 121 determines the transmission priorities of the data of the respective logical channels based on logical channel information, which is acquired from the MAC control unit 123 and which can be transmitted for the respective cells, data quantity information for the respective logical channels, which is acquired from the transmission data storage unit 105, and transmission data size and transmission position information (transmission cell information), which are acquired from the UL scheduling unit 119, and notifies the transmission data storage unit 105 of the logical channels and the data quantity to be transmitted.

The MAC control unit 123 has the function of the MAC layer. When the MAC control unit 123 acquires an activation/deactivation instruction information and DRX control information about the cells (or component carriers) in the MAC control information which is input from the MAC information extraction unit 117, the MAC control unit 123 controls the wireless unit 111, the transmission processing unit 109, and the reception processing unit 113 in order to perform activation/deactivation control and DRX control. The MAC control unit 123 outputs transmission timing information in the MAC control information, which is input from the MAC information extraction unit 117, to the transmission processing unit 109. The MAC control unit 123 manages transmission timing group information, which is input from the RRC control unit 129, and controls the transmission processing unit 109. In addition, the MAC control unit 123 outputs the logical channel information, which is input from the RRC control unit 129 and which can be transmitted for the respective cells, to the LCP control unit 121.

The RRC message processing unit 127 analyzes the RRC message, which is input from the data processing unit 125, and outputs the result thereof to the RRC control unit 129.

The RRC control unit 129 performs a process of connection establishment to or connection release from the base station apparatus 3, and performs various settings, such as carrier aggregation setting, transmission timing group setting, and radio bearer setting, in order to communicate with the base station apparatus 3, exchanges information with the higher layer in accordance with the various settings, and controls the lower layer in accordance with the various settings. The RRC control unit 129 controls the RRC message generation unit 103 such that the RRC message is prepared. When the radio bearer setting is performed, the RRC control unit 129 outputs the logical channel information, which can be transmitted for the respective cells, to the MAC control unit 123. The RRC control unit 129 outputs information, which is desired for the MAC layer, to the MAC control unit 123.

Also, the transmission processing unit 109, the wireless unit 111, and the reception processing unit 113 perform the operation of the physical layer. The transmission data storage unit 105, the transmission HARQ processing unit 107, the reception HARQ processing unit 115, the MAC information extraction unit 117, the UL scheduling unit 119, the LCP control unit 121, and the MAC control unit 123 perform the operation of the MAC layer. The data generation unit 101 and the data processing unit 125 perform the operations of the RLC layer and the PDCP layer. The RRC message generation unit 103, the RRC message processing unit 127, and the RRC control unit 129 perform the operation of the RRC layer.

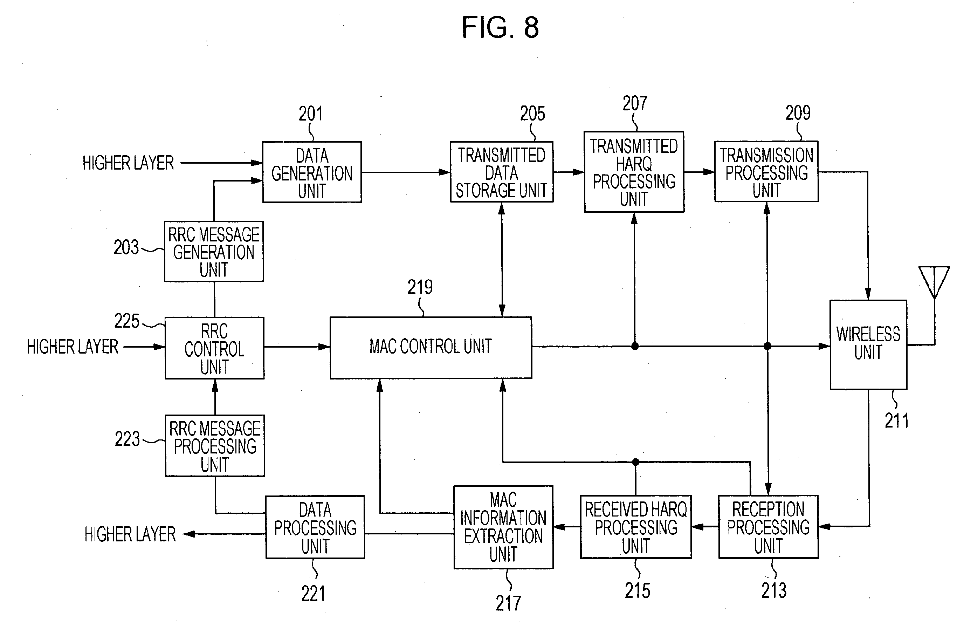

Fig. 8 is a diagram showing the configuration of the base station apparatus according to the embodiment of the present disclosure. A base station apparatus 3 includes a data generation unit 201, an RRC message generation unit 203, a transmission data storage unit 205, a transmission HARQ processing unit 207, a transmission processing unit 209, a wireless unit 211, a reception processing unit 213, a reception HARQ processing unit 215, a MAC information extraction unit 217, a MAC control unit 219, a data processing unit 221, an RRC message processing unit 223, and an RRC control unit 225.

The user data from the higher layer and the control data from the RRC message generation unit 203 are input to the data generation unit 201. The data generation unit 201 has functions of the PDCP layer and the RLC layer, and performs functions of compressing the header of the IP packet of the user data and encrypting the data, and a process of segmenting and coupling the data, thereby adjusting data size. The data generation unit 201 outputs the processed data and the logical channel information of the data to the transmission data storage unit 205. The RRC message generation unit 203 prepares an RRC message according to the instruction of the RRC control unit 225, and outputs the RRC message to the data generation unit 201.

The transmission data storage unit 205 accumulates data, which is input from the data generation unit 201, for each user, and outputs the user data, which is instructed based on the instruction from the MAC control unit 219, to the transmission HARQ processing unit 207 as much as the instructed data quantity. In addition, the transmission data storage unit 205 outputs the data quantity information of the data, which is accumulated for the respective logical channels, to the MAC control unit 219.

The transmission HARQ processing unit 207 encodes the input data, and performs a puncture process on the encoded data. Further, the transmission HARQ processing unit 207 outputs the punctured data to the transmission processing unit 209, and stores the encoded data. When data retransmission is instructed from the MAC control unit 219, the transmission HARQ processing unit 207 performs a puncture process, which is different from the previously performed puncture process, based on the stored encoded data, and outputs the punctured data to the transmission processing unit 209.

The transmission processing unit 209 modulates and encodes the data which is input from the transmission HARQ processing unit 207. The transmission processing unit 209 maps the modulated and encoded data onto the signals and the respective channels, such as the physical downlink control channel PDCCH, the downlink synchronous signal, the physical broadcast channel PBCH, and the physical downlink shared channel PDSCH, for the respective cells, and performs an OFDM signal process, such as serial/parallel conversion, the Inverse Fast Fourier Transform (IFFT) and CP insertion, on the mapped data, thereby generating an OFDM signal.

Further, the transmission processing unit 209 outputs the generated OFDM signal to the wireless unit 211. In addition, when a reception data response instruction is issued from the MAC control unit 219, the transmission processing unit 209 generates an ACK or NACK signal, arranges the generated signal in the physical downlink control channel (PDCCH), and outputs the signal to the wireless unit 211.

The wireless unit 211 up converts the data, which is input from the transmission processing unit 209, into a radio frequency, and transmits the data from the transmit antenna by adjusting transmission power. In addition, the wireless unit 211 down converts the radio signal, which is received by the receive antenna, and outputs the radio signal, which is acquired through the down conversion, to the reception processing unit 213. The reception processing unit 213 performs the Fast Fourier Transform (FFT) process, the decoding process, the demodulation process, and the like on the signal which is input from the wireless unit 211. The reception processing unit 213 outputs the data of the physical uplink shared channel (PUSCH) in the demodulated data to the reception HARQ processing unit 215. In addition, the reception processing unit 213 outputs the response information (ACK/NACK) of the downlink transmission data of the control data, downlink wireless quality information (CQI) and the uplink transmission request information (scheduling request), which are acquired from the physical uplink control channel PUCCH in the demodulated data, to the MAC control unit 219.

The reception HARQ processing unit 215 performs the decoding process on the data, which is input from the reception processing unit 213. When the decoding process is successful, the reception HARQ processing unit 215 outputs the data to the MAC information extraction unit 217. When the decoding process, which is performed on the input data, fails, the reception HARQ processing unit 215 stores the data on which the decoding process fails. When the reception HARQ processing unit 215 receives the retransmission data, the reception HARQ processing unit 215 combines the stored data with the retransmission data, and performs the decoding process. In addition, the reception HARQ processing unit 215 notifies the MAC control unit 219 about the success or failure of the input data decoding process.

The MAC information extraction unit 217 extracts the control data of the MAC layer from the data, which is input from the reception HARQ processing unit 215, and outputs the extracted control information to the MAC control unit 219. The MAC information extraction unit 217 outputs remaining data to the data processing unit 221. The data processing unit 221 has functions of the PDCP layer and the RLC layer, and performs a function of decompressing the compressed IP header, a function of decoding the encrypted data and a process of segmenting and coupling the data, thereby returning the data to the original form thereof. The data processing unit 221 performs classification as the RRC message and the user data, outputs the RRC message to the RRC message processing unit 223, and outputs the user data to the higher layer.

The MAC control unit 219 has the function of the MAC layer, and performs a downlink and uplink scheduling process. The MAC control unit 219 performs the downlink and uplink scheduling process based on the response information (ACK/NACK) of the downlink transmission data, the downlink wireless quality information (CQI) and the uplink transmission request information (scheduling request) which are input from the reception processing unit 213, the BSR which is input from the MAC information extraction unit 217, and data quantity information for each user which is acquired from the transmission data storage unit 205. The MAC control unit 219 outputs a scheduling result to the transmission processing unit 209. Also, the MAC control unit 219 may perform a process of distributing the downlink data for each user into each cell using a procedure which may be performed in the mobile station apparatus 1-1.

In addition, the MAC unit 219 acquires the response information for the uplink transmission data from the reception processing unit 213. When the response information indicates NACK (negative acknowledgement), the MAC control unit 219 instructs retransmission to the transmission HARQ processing unit 207 and the transmission processing unit 209. When the MAC control unit 219 acquires information about success or failure of the data decoding process from the reception HARQ processing unit 215, the MAC control unit 219 instructs the transmission processing unit 209 to transmit an ACK or NACK signal.

In addition, the MAC control unit 219 performs an activation/deactivation process on cells (or component carriers) which are allocated to the mobile station apparatus 1-1, and manages the transmission timing group. The RRC message processing unit 223 analyzes the RRC message, which is input from the data processing unit 221, and outputs the result thereof to the RRC control unit 225.

The RRC control unit 225 performs a process of connection establishment to or connection release from the mobile station apparatus 1-1, and performs various settings, such as carrier aggregation setting, transmission timing group setting, and radio bearer setting, in order to communicate with the mobile station apparatus 1-1, exchanges information with the higher layer in accordance with the various settings, and controls the lower layer in accordance with the various settings. The RRC control unit 225 sets cells to which the radio bearers are transmitted with regard to the mobile station apparatus 1-1. The RRC control unit 225 controls the RRC message generation unit 203 such that the RRC message is prepared. In addition, the RRC control unit 225 outputs information, which is desired for the MAC layer, to the MAC control unit 219.

Also, the transmission processing unit 209, the wireless unit 211, and the reception processing unit 213 perform the operation of the PHY layer. The transmission data storage unit 205, the transmission HARQ processing unit 207, the reception HARQ processing unit 215, the MAC information extraction unit 217, and the MAC control unit 219 perform the operation of the MAC layer. The data generation unit 201 and the data processing unit 221 perform the operations of the RLC layer and the PDCP layer. The RRC message generation unit 203, the RRC message processing unit 223, and the RRC control unit 225 perform the operation of the RRC layer.

### [Description of Operation]

The wireless communication system is assumed as described with reference to Figs. 1 to 6. Further, as shown in Fig. 1, the base station apparatus 3 communicates with a plurality of mobile station apparatuses 1-1, 1-2, and 1-3. In addition, a wireless communication system is assumed such that the base station apparatuses and the mobile station apparatus, which are described with reference to Fig. 6, perform communication through a plurality of cells. A procedure, in which the mobile station apparatus 1-1 classifies the control data and the user data and the information is transmitted to the base station apparatus, will be described below.

After the connection establishment process is performed between the base station apparatus 3 and the mobile station apparatus 1-1, the radio bearer is set between the base station apparatus 3 and the mobile station apparatus 1-1. The Radio Bearer (RB) is set between the base station apparatus 3 and the RRC layer of the mobile station apparatus 1-1. Information, such as the logical channel number, the logical channel group number, the logical channel priority, and Prioritized Bit Rate (PBR), is set for each of the control data radio bearer (Signaling Radio Bearer (SRB)) and the Data Radio Bearer (DRB) of the RB. The RRC layer of the mobile station apparatus 1-1 notifies the MAC layer of the mobile station apparatus 1-1 about the set information, such as the logical channel number, the logical channel group number, the logical channel priority, and the PBR.

Subsequently, the base station apparatus 3 determines cells in which the respective RBs are transmitted (or classification of the respective RBs to correspond to certain cells), and notifies the mobile station apparatus 1-1 of determined information. Also, the base station apparatus 3 may designate cells in which only the SRBs are transmitted. In addition, when cells to which the respective RBs are transmitted are not set, the base station apparatus 3 and the mobile station apparatus 1-1 may analyze that the SRBs are transmitted in a Primary Cell (PCell) or cells of a transmission timing group, which include the primary cell. The RRC layer of the mobile station apparatus 1-1 notifies the MAC layer of the mobile station apparatus 1-1 of the logical channel information of the transmission data for the respective cells (information which indicates that the data of a certain logical channel number is transmitted in a certain cell). The MAC layer of the mobile station apparatus 1-1 distributes the data of the respective logical channels to the respective cells based on the logical channel information of the transmission data for the respective cells which are notified from the RRC layer.

Also, the RRC layer of the mobile station apparatus 1-1 may notify the MAC layer of only the logical channel information of the SRBs for the respective cells (information which indicates data of the logical channel numbers of the SRBs to be transmitted to the respective cells). When only the logical channel information of the SRBs for the respective cells is notified from the RRC layer, the MAC layer distributes only the data of the designated logical channels to the designated cells. In addition, the data of the designated logical channels may be distributed to the designated cells, and the other data of the logical channels may be distributed to cells which are not distributed.

In addition, when the transmission timing group is set by the base station apparatus 3, the RRC layer of the mobile station apparatus 1-1 may notify the MAC layer of the logical channel information of the transmission data for each transmission timing group (information which indicates the data of a certain logical channel number to be transmitted to the cells of a certain transmission timing group) instead of the logical channel information of the transmission data for the respective cells.

If the PHY layer of the mobile station apparatus 1-1 acquires the uplink grant in the physical downlink control channel (PDCCH), the PHY layer notifies the MAC layer about the uplink grant information. The uplink grant information includes the transmission cell information which indicates a certain cell to which the uplink data is transmitted, transmission format (or data size) information, modulating and encoding method information, and the like.

When the MAC layer of the mobile station apparatus 1-1 acquires the uplink grant information from the PHY layer, the MAC layer of the mobile station apparatus 1-1 performs a Logical Channel Prioritization (LCP) procedure by taking only the logical channels which can be transmitted in transmission cells designated in the uplink grant information, into consideration. That is, the priorities of the logical channels which can be transmitted in the designated transmission cells and the transmission priorities of the data transmitted from the PBR of the logical channels are determined, and data corresponding to the data size, which is notified from the PHY layer, is provided to the PHY layer based on the transmission priority.

The PHY layer of the mobile station apparatus 1-1 transmits the data, which is provided from the MAC layer in the physical uplink shared channel (PUSCH) of the time and the frequency position designated in the uplink grant.

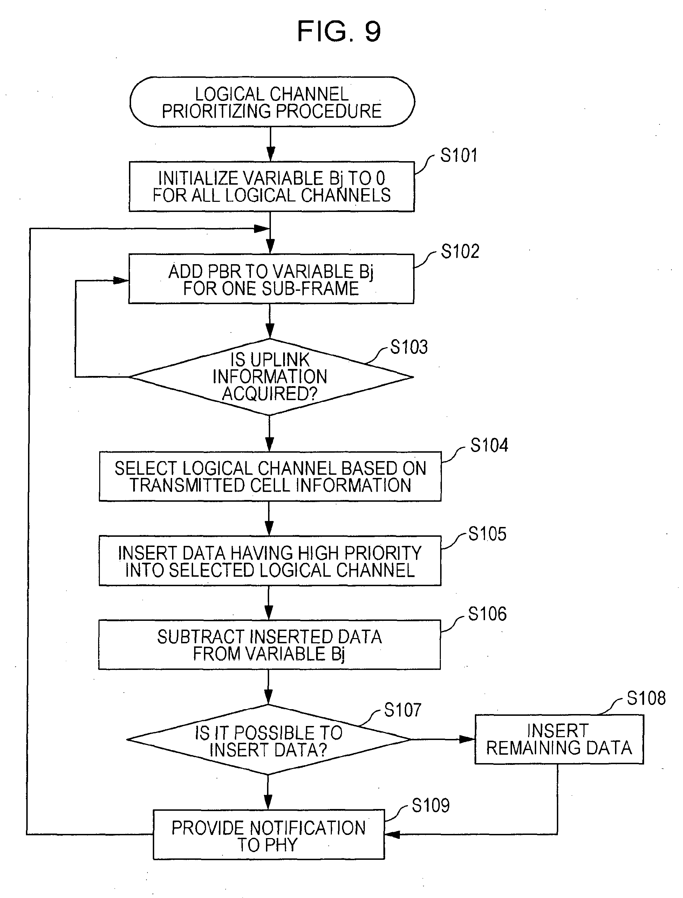

Fig. 9 is a flowchart showing an operation of the MAC layer of the mobile station apparatus according to the embodiment of the present disclosure. The operation of the MAC layer of the mobile station apparatus 1-1 will be described below.

The MAC layer of the mobile station apparatus 1-1 initializes the logical channel prioritizing procedure. More specifically, the MAC layer of the mobile station apparatus 1-1 acquires the setting information of the respective logical channels and the logical channel information of the transmission data for the respective cells from the RRC layer, sets variables Bj to all of the logical channels j, and sets the initial value of the variable Bj to 0 (step S101). The MAC layer of the mobile station apparatus 1-1 adds the PBRs of the respective logical channels to the variables Bj of the respective logical channels for every sub-frame (step S102).

The MAC layer of the mobile station apparatus 1-1 checks whether or not an uplink grant is acquired from the PHY layer for every sub-frame (step S103). If the uplink grant is not acquired, the process returns to step S102. If the uplink grant is acquired, the logical channels which can be transmitted in the cells are selected based on the transmission cell information of uplink grant information and the logical channel information of the transmission data for the respective cells which are notified from the RRC layer in advance (step S104). The MAC layer of the mobile station apparatus 1-1 inserts data into the transport channel from data, in which the variable Bj is greater than 0 (Bj>0), in the selected logical channels and data of the logical channel, which has a higher priority, in the logical channels which can be transmitted in the cells in which radio resources are allocated (step S105).

When the MAC layer of the mobile station apparatus 1-1 terminates the insertion of the data in which Bj>0, the MAC layer of the mobile station apparatus 1-1 subtracts the inserted data quantity from the variable Bj of the selected logical channels (step S106). The MAC layer of the mobile station apparatus 1-1 checks whether or not it is possible to insert further data by taking data size into consideration when the insertion of the data, in which Bj>0, is terminated (step S107). When it is possible to insert the data, the MAC layer of the mobile station apparatus 1-1 sequentially inserts data, in which Bj is equal to or less then 0, of the logical channels which can be transmitted to the transport channels in order of higher priority (step S108). When the data corresponding to the data size is inserted, the MAC layer of the mobile station apparatus 1-1 provides a notification that the data insertion into the PHY layer is terminated (step S109). Further, the process returns to step S102 and the above process is repeated.

In addition, in step S107, the MAC layer of the mobile station apparatus 1-1 may insert all of the data of the selected logical channels into the transport channels, or may insert data of other than the selected logical channels when it is possible to insert data. Further, the MAC layer of the mobile station apparatus 1-1 may insert only the user data of the data of other than the selected logical channels. In this case, when the RRC layer of the mobile station apparatus 1-1 inserts all of the data of the selected logical channels to the transport channels in the MAC layer, the RRC layer of the mobile station apparatus 1-1 may designate a logical channel which can be inserted in a case in which the data can be inserted.

In this way, the base station apparatus 3 can set the transmission of the SRB and the DRB for the mobile station apparatus 1-1 for the respective cells, and the mobile station apparatus 1-1 can perform data distribution control for the respective cells without recognizing the types of the logical channels in the lower layer of the communication protocol stack.

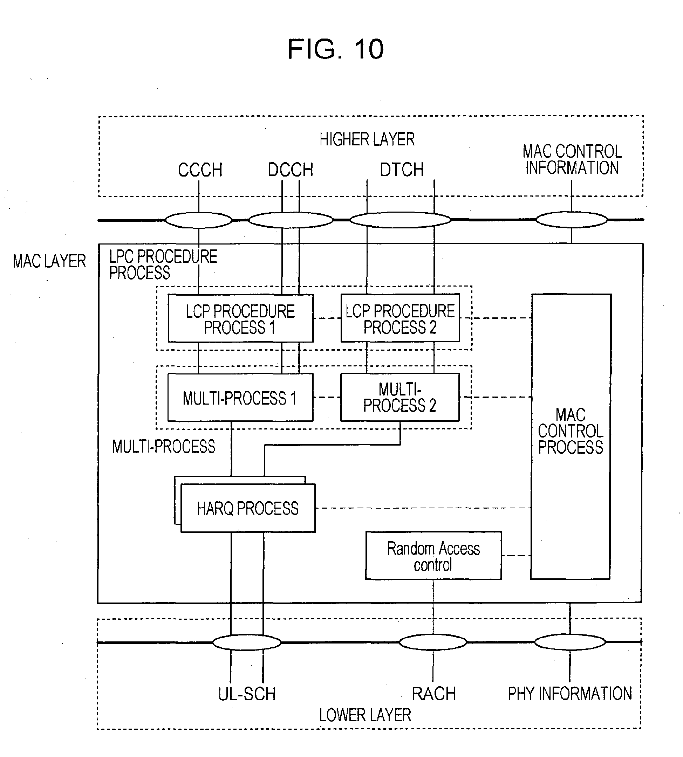

Fig. 10 is a diagram showing the configuration of the MAC layer related to the uplink of the mobile station apparatus according to the embodiment of the present disclosure. The configuration of the MAC layer of the mobile station apparatus 1-1 will be described below.

In the MAC control process, an LCP procedure process, a multi-process, and a HARQ process are controlled based on the MAC control information from the higher layer and the PHY information of the lower layer. In the LCP procedure process, the logical channel prioritizing procedure is performed on the data of the designated logical channel, as described above. Here, an example, in which a logical channel prioritizing procedure process (LCP procedure process 1) is performed on the data of the CCCH and the DCCH and a logical channel prioritizing procedure process (LCP procedure process 2) is performed on the data of the DTCH, will be shown.

In the multi-process, a process of mapping the data of the logical channels onto the UL-SCH of the transport channels is based on the result of the logical channel prioritizing procedure. In the HARQ process, the retransmission of the data mapped onto the transport channels is managed. The data of the transport channels, processed in the MAC layer is notified to the PHY layer. Also, the MAC control information includes the logical channel number, the logical channel group number, the logical channel priority, the Prioritized Bit Rate (PBR), the logical channel information of the transmission data in every cell, and the like. The PHY information includes the uplink grant information, information related to retransmission, and the like.

The MAC control process allocates the respective logical channels to the LCP procedure process 1 or the LCP process procedure 2 based on the logical channel information of the transmission data for the respective cells of the MAC control information. In Fig. 10, the logical channels CCCH and DCCH are allocated to the LCP procedure process 1, and the logical channel DTCH is allocated to the LCP procedure process 2. However, it is possible to perform a plurality of LCP procedure processes by further subdividing the respective logical channels according to the instruction of the higher layer.

In the MAC control process, whether the LCP procedure process 1 or the LCP procedure process 2 is used is determined based on the transmission cell information of the uplink grant information of the PHY information, and the determined process is performed.

In this manner, the base station apparatus 3 can set DRB and SRB transmission to the mobile station apparatus 1-1 for the respective cells, and the mobile station apparatus 1-1 can perform data distribution control for the respective cells in the lower layer of the communication protocol stack without recognizing the types of the logical channels.

In addition, when the carrier aggregation using the plurality of cells is performed, the data of the logical channels is distributed to the respective cells and deactivation instruction information for a certain cell is received from the base station apparatus 3, the MAC layer of the mobile station apparatus 1-1 determines whether or not it is possible to distribute the transmission data to the respective cells. When it is not possible to distribute the transmission data, the MAC layer of the mobile station apparatus 1-1 stops a data distribution process for the respective cells using the logical channels, and returns to the LCP procedure for all of the logical channels in all of the cells.

In addition, the MAC layer of the mobile station apparatus 1-1 may provide a notification that it is not possible to distribute data to the RRC layer, thereby requesting a new setting from the RRC layer. In addition, when the logical channels, which are set in the cells which receive the deactivation instruction information, are also set in other activated cells, the MAC layer of the mobile station apparatus 1-1 may distribute the transmission data of the logical channels to the activated cells. When the logical channels, which are set in the cells which receive the deactivation instruction information, are not set in other activated cells, the MAC layer of the mobile station apparatus 1-1 may transmit the transmission data of the logical channels in the primary cell or a transmission timing group including the primary cell.

In addition, the MAC layer of the mobile station apparatus 1-1 may separately notify Buffer Status Reports (BSRs) for the respective cells the same as in the data distribution. In this case, the RRC layer of the mobile station apparatus 1-1 notifies the MAC layer of the logical channel group information (information of cells which notify the BSR of a certain logical channel group) of the BSRs which are transmitted for the respective cells. In addition, the base station apparatus 3 may notify the mobile station apparatus 1-1 of the cells which notify the BSR of a certain logical channel group.

In addition, the MAC layer of the mobile station apparatus 1-1 may determine cells, to which the BSR is transmitted, using the logical channel information of the transmission data for the respective cells again without setting the logical channel group information of the BSR which is newly transmitted from the RRC layer for the respective cells. In addition, a BSR trigger condition is classified as SRB and DRB logical channel groups. When data, which has a higher priority, is generated in each group, the BSR may be triggered. In addition, a periodical timer is set for each group, and the BSR may be triggered when each timer expires. Otherwise, when each timer expires and data exists, the BSR may be triggered.

In addition, the MAC layer of the mobile station apparatus 1-1 may separately transmit the scheduling request (SR) to cells, to which the BSR is transmitted, the same as in the BSR. In this case, the MAC layer determines cells, to which the scheduling request is transmitted, based on the BSRs of the logical channels, which are triggered, and notifies the PHY layer of the cells to which the scheduling request is transmitted.

In this manner, it is possible to transmit the BSRs or the scheduling requests to appropriate cells, and thus data transmission efficiency is improved.

Also, the mobile station apparatus 1-1 may notify the base station apparatus 3 of information, which indicates that the mobile station apparatus 1-1 has a function of distributing data as described above, when the mobile station apparatus 1-1 is connected to the base station apparatus 3. When the base station apparatus 3 receives the information, which indicates that the mobile station apparatus 1-1 has the function of distributing data, from the mobile station apparatus 1-1, the base station apparatus 3 determines whether or not to use the function of distributing data with regard to the mobile station apparatus 1-1 which notifies the information which indicates that the mobile station apparatus 1-1 has the function of distributing data.

In addition, the base station apparatus 3 may include broadcast information having information which indicates that the base station apparatus 3 has a function of instructing the mobile station apparatus 1-1 to distribute data. In this case, the mobile station apparatus 1-1 may recognize the information from the broadcast information, and may determine whether or not to notify the base station apparatus 3 of information which indicates that the mobile station apparatus 1-1 has a function of distributing data.

Hereinabove, although the embodiment of the present disclosure is described with reference to the accompanying drawings, detailed configuration is not limited to the above-described embodiment and various design changes are possible without deporting from the gist of the present disclosure.

In the embodiment, although the mobile station apparatus is described as an example of a terminal apparatus or a communication apparatus, the present disclosure is not limited thereto. It is apparent that it is possible to apply the present disclosure to a stationary or non-movable electronic apparatus which is installed inside or outside, for example, an AV apparatus, a kitchen utensil, a cleaning or washing machine, an air conditioner, office machinery, a vending machine, or other home appliances.

In addition, for convenience of explanation, the mobile station apparatus 1-1 and the base station apparatus 3 according to the embodiment are described with reference to the functional block diagrams. However, the mobile station apparatus and the base station apparatus may be controlled by storing a program for realizing the function of each of the units of the mobile station apparatus 1-1 and the base station apparatus 3 or a part of the function in a computer-readable recording medium, causing a computer system to read and execute the program which is recorded in the recording medium and is read. Also, here, the "computer system" includes hardware such as an OS and peripherals.

In addition, the "computer-readable recording medium" indicates a portable medium such as a flexible disk, a magneto-optical disk, a ROM and a CD-ROM, or a storage apparatus such as hard disk which is installed in the computer system. Further, the "computer-readable recording medium" includes a device which dynamically holds the program for a short period of time, similarly to a communication line in a case in which the program is transmitted through a network, such as the Internet, or a communication line, such as a telephone line, and a device which holds the program for a prescribed period of time similarly to a volatile memory inside a computer system which functions as a server or a client in such a case. In addition, the program may be a program which realizes a part of the above-described functions or may be a program which can realize the above-described function through combination with a program which is recorded in the computer system in advance.

In addition, each of the functional blocks, which are used in each of the embodiments, may be realized as an LSI which is a typical integrated circuit. The functional blocks may be realized as individual chips or may be realized as chips in which some or all of the functional blocks are integrated. In addition, an integrated circuit technique is not limited to the LSI and may be realized as a dedicated circuit or a general-purpose processor. In addition, when an integrated circuit technique which is substituted for the LSI is realized due to the improvement of semiconductor technology, it is possible to use an integrated circuit which is made using the technology.

Hereinabove, although the embodiments of the present disclosure are described with reference to the accompanying drawings, detailed configuration is not limited to the embodiments and design which does not depart from the gist of the present disclosure is included in the claims.

### INDUSTRIAL APPLICABILITY

It is possible to apply the present disclosure to a mobile phone, a personal computer, a tablet-type computer or the like.

### DESCRIPTION OF REFERENCE NUMERALS

- 1-1 to 1-3: MOBILE STATION APPARATUS
- 3: BASE STATION APPARATUS
- 5: RRH
- 101, 201: DATA GENERATION UNIT
- 103, 203: RRC MESSAGE GENERATION UNIT
- 105, 205: TRANSMISSION DATA STORAGE UNIT
- 107, 207: TRANSMISSION HARQ PROCESSING UNIT
- 109, 209: TRANSMISSION PROCESSING UNIT
- 111, 211: WIRELESS UNIT
- 113, 213: RECEPTION PROCESSING UNIT
- 115, 215: RECEPTION HARQ PROCESSING UNIT
- 117, 217: MAC INFORMATION EXTRACTION UNIT
- 123, 219: MAC CONTROL UNIT
- 125, 221: DATA PROCESSING UNIT
- 127, 223: RRC MESSAGE PROCESSING UNIT
- 129, 225: RRC CONTROL UNIT
- 119: UL SCHEDULING UNIT
- 121: LCP CONTROL UNIT

## Claims

1. A wireless communication system in which a base station apparatus communicates with a terminal apparatus through a plurality of cells,
wherein the base station apparatus transmits logical channel information for classifying logical channels corresponding to the respective cells to the terminal apparatus, and
wherein the terminal apparatus transmits data of the logical channels corresponding to the respective cells based on the logical channel information.

2. The wireless communication system according to claim 1,
wherein the terminal apparatus transmits a buffer status report to the base station apparatus based on the logical channels.

3. The wireless communication system according to claim 2,
wherein the terminal apparatus performs division on a scheduling request and transmits resulting scheduling requests to the cells to which the buffer status report is transmitted.

4. A terminal apparatus, which includes a communication protocol stack having a hierarchical structure and communicates with a base station apparatus through a plurality of cells, the terminal apparatus comprising:
means for causing a first layer of the communication protocol stack to receive data from the base station apparatus;
means for causing, when the first layer receives uplink grant data from the base station apparatus, the first layer to notify a second layer of the uplink grant and information of the cells to which the uplink grant is transmitted;
means for causing a third layer to notify the second layer of logical channel information for classifying the logical channels corresponding to the respective cells; and
means for causing the second layer to distribute the data of the respective logical channels to the respective cells on the basis of the logical channel information, the uplink grant, and the information of the cells to which the uplink grant is transmitted.

5. The terminal apparatus according to claim 4,
wherein the terminal apparatus notifies the base station apparatus of a fact that means for distributing the data of the logical channels is included.

6. A base station apparatus, which communicates with a terminal apparatus through a plurality of cells,
wherein, when data needs to be classified for the respective cells in the plurality of cells, the base station apparatus transmits logical channel information for classifying logical channels corresponding to the respective cells to the terminal apparatus.

7. The base station apparatus according to claim 6,
wherein the base station apparatus notifies the terminal apparatus of a fact that the base station apparatus has a function of transmitting the logical channel information.

8. A method of controlling a terminal apparatus, which has a communication protocol stack having a hierarchical structure and communicates with a base station apparatus through a plurality of cells, the method at least comprising:
a step of causing a first layer of the communication protocol stack to receive data from the base station apparatus;
a step of causing, when the first layer receives uplink grant data from the base station apparatus, the first layer to notify a second layer of the uplink grant and information of the cells to which the uplink grant is transmitted;
a step of causing a third layer to notify the second layer of logical channel information for classifying the logical channels corresponding to the respective cells; and
a step of causing the second layer to distribute the data of the respective logical channels to the respective cells on the basis of the logical channel information, the uplink grant, and the information of the cells to which the uplink grant is transmitted.

9. An integrated circuit applied to a terminal apparatus, which has a communication protocol stack having a hierarchical structure and communicates with a base station apparatus through a plurality of cells, the integrated circuit comprising:
means for causing a first layer of the communication protocol stack to receive data from the base station apparatus;
means for causing, when the first layer receives uplink grant data from the base station apparatus, the first layer to notify a second layer of the uplink grant and information of the cells to which the uplink grant is transmitted;
means for causing a third layer to notify the second layer of logical channel information for classifying the logical channels corresponding to the respective cells; and
means for causing the second layer to distribute the data of the respective logical channels to the respective cells on the basis of the logical channel information, the uplink grant, and the information of the cells to which the uplink grant is transmitted.
